# EUROPÄISCHE PATENTSCHRIFT

(11) **EP 1 963 790 B1**
(45) Veröffentlichungstag und Bekanntmachung des Hinweises auf die Patenterteilung: **13.05.2009**
(21) Anmeldenummer: 06841495.2
(22) Anmeldetag: 20.12.2006
(51) Int. Cl.: G01F 1/698, F02D 41/18

(54) **VERFAHREN ZUM BETREIBEN EINES ABGASMASSENSTROMSENSORS**
METHOD FOR OPERATING AN EXHAUST GAS MASS FLOW SENSOR
PROCEDE DE MISE EN OEVRE D'UN DETECTEUR DE DEBIT MASSIQUE DE GAZ D'ECHAPPEMENT

(30) Priorität: 22.12.2005 DE 102005061548
(43) Veröffentlichungstag der Anmeldung: 03.09.2008
(73) Patentinhaber: Pierburg GmbH, 41460 Neuss (DE)
(72) Erfinder: LÖSING, Karl-Heinrich, 46519 Alpen (DE); NIGRIN, Sven, 40468 Düsseldorf (DE); GRIMM, Karsten, 52064 Aachen (DE); DISMON, Heinrich, 52538 Gangelt (DE)
(74) Vertreter: Patentanwälte ter Smitten
(86) Internationale Anmeldenummer: PCT/EP2006/069987
(87) Internationale Veröffentlichungsnummer: WO 2007/074122

(56) Entgegenhaltungen:
- WO-A1-03/095947
- DE-A1- 3 810 240
- DE-A1- 3 932 304
- DE-A1- 19 953 718

## Beschreibung

Die Erfindung betrifft ein Verfahren zum Betreiben eines Abgasmassenstromsensors. Insbesondere betrifft die Erfindung ein Verfahren zum Betreiben eines Abgasmassenstromsensors in Abgasmassenströmen in Kraftfahrzeugen.

Abgasmassenstromsensoren weisen einen beispielsweise quaderförmigen Trägerkörper auf, auf dem ein Heizelement, beispielsweise in Form einer Leiterbahn, aufgebracht ist. Der Trägerkörper ist üblicherweise mittels eines Halteelements in einem Abgaskanal befestigt, so dass der Trägerkörper an seiner Schmalseite von dem Abgasmassenstrom angeströmt wird und der Abgasmassenstrom entlang der breiteren Seite des Trägerkörpers strömt. Insbesondere durch Konvektion erfolgt eine Wärmeabgabe von dem Heizelement an den Abgasmassenstrom. Durch Messung der Temperaturänderung oder Messung der erforderlichen Leistungsaufnahme um die Temperaturen des Heizelements konstant zu halten, kann mit Hilfe geeigneter Algorithmen ein Abgasmassenstrom bestimmt werden. Hierzu wird ggf. in Strömungsrichtung dem Abgasmassenstromsensor vorgelagert ein Temperatursensor angeordnet, der die Temperatur des Abgasstroms misst. Der Temperatursensor kann identisch wie der Abgasmassenstromsensor aufgebaut sein, wobei hierbei das Heizelement nur zum Messen der Temperatur verwendet wird.

Der Einsatz von Abgasmassenstromsensoren ist in Abgasmassenströmen von Kraftfahrzeugen bisher nur sehr begrenzt möglich. Dies liegt darin begründet, dass einerseits hohe Temperaturen auftreten und anderseits die in dem Abgasstrom von Kraftfahrzeugen enthaltenen Partikel zu Ablagerungen auf dem Abgasmassenstromsensor führen. Dies führt zu einer Verfälschung der Messergebnisse und somit zu einer ungenauen Bestimmung des Abgasmassenstroms. Auch das Auftreten von Kondensat bzw. Flüssigkeitströpfchen im Abgasmassenstrom, die auf den Trägerkörper des Abgasmassenstromsensors treffen und hier kondensieren bzw. verdampfen, führen zu einer erheblichen Verfälschung der Messergebnisse.

Aus der DE 199 53 718 A1 ist ein Abgasmassenstrommesser bekannt, der durch Erhitzen gereinigt werden kann. Wann eine solche Aufheizung zum Abbrand des Rußes stattfinden soll ist nicht beschrieben.

Aus der DE-OS 38 10 240 ist ein Luftmassensensor für eine Kraftstoffregeleinrichtung bekannt, der ebenfalls einen Hitzdraht zum Aufheizen des Sensors zur Entfernung von Schmutzpartikeln aufweist. Das Abbrennen erfolgt jeweils nach dem Stoppen der Brennkraftmaschine und wird über die ECU der Brennkraftmaschine gesteuert.

In der WO 03/095947 wird ein Sensor zur Messung des Abgasmassenstroms einer Brennkraftmaschine beschrieben, wobei Ablagerungen auf dem Sensor, die die Genauigkeit der Messung beeinträchtigen könnten, durch Erhitzen des Sensor auf eine Reinigungstemperatur verbrannt werden. Das Erhitzen des Sensors erfolgt dabei gemäß einer zeitabhängigen Funktion oder basierend auf verschiedenen Parametern wie beispielsweise der Motordrehzahl oder der Drosselklappenposition.

Aufgabe der Erfindung ist es ein Verfahren zum Betreiben eines Abgasmassenstromsensors zu schaffen, durch das der Abgasmassenstromsensor insbesondere auch zum Einsatz in Abgasmassenströmen von Kraftfahrzeugen geeignet ist.

Die Lösung der Aufgabe erfolgt erfindungsgemäß durch ein Verfahren gemäß Anspruch 1.

Bei dem erfindungsgemäßen Verfahren zum Betreiben eines Abgasmassenstromsensors wird der Abgasmassenstromsensor in einem Betriebsmodus bei Betriebstemperatur betrieben. Die Betriebstemperatur kann schwanken, wenn die Messung des Abgasstroms dadurch erfolgt, dass die Leistungsaufnahme des Sensors konstant gehalten wird und die Temperaturschwankungen gemessen werden. Erfindungsgemäß ist der Abgasmassenstromsensor in einen Reinigungsmodus zum Reinigen umschaltbar. In dem Reinigungsmodus wird der Abgasmassenstromsensor stärker erwärmt, wobei die Reinigungstemperatur i. a. höher als die Betriebstemperatur ist. Durch diese Temperaturerhöhung werden abbrennbare Ablagerungen auf dem Abgasmassenstromsensor abgebrannt. Hierdurch ist sichergestellt, dass die Messergebnisse des Abgasmassenstromsensors nicht durch Ablagerungen verfälscht werden. Das Abbrennen erfolgt hierbei insbesondere in einem Messbereich des Abgasmassenstromsensors, wobei der Messbereich insbesondere derjenige Bereich ist, in dem die Leitung, insbesondere mäanderförmig auf der Oberfläche des Trägerkörpers aufgebaut ist. Durch das erfindungsgemäße Betreiben des Abgasmassenstromsensors in zwei unterschiedlichen Modi ist es insbesondere nicht erforderlich, den Abgasmassenstromsensor während eines herkömmlichen Betriebs mit hoher

Temperatur zu betreiben, um während des normalen Betriebs sicherzustellen, dass keine oder nur wenige Ablagerungen erfolgen. Vielmehr kann der Abgasmassenstromsensor im herkömmlichen Betrieb, bei zur Messung des Abgasmassenstroms optimaler Temperatur, betrieben werden. Dies hat insbesondere auch den Vorteil, dass das Material des Abgasmassenstromsensors geringerem Verschleiß ausgesetzt ist.

Bei Verwenden des Abgasmassenstromsensors in Abgasmassenströmen in Kraftfahrzeugen ist der Abgasmassenstromsensor Fluidtemperaturen bzw. Abgastemperaturen von bis zu 600 °C ausgesetzt. Beispielsweise beim Kaltstart, sowie in Abhängigkeit der Lage bzw. der Anordnung des Abgasmassenstromsensors liegen übliche Fluidtemperaturen beispielsweise im Bereich von 200 bis 250 °C. Die Betriebstemperatur des Abgasmassenstromsensors, d. h. die Temperatur, auf die der Sensor zur Messung aufgeheizt wird, liegt üblicherweise ca. 100 °C über der Fluidtemperatur. Insbesondere bei relative geringen Fluidtemperaturen und somit auch relativ geringen Betriebstemperaturen erfolgt im Reinigungsmodus ein Abbrennen der Ablagerungen. Die Reinigungstemperatur liegt vorzugsweise im Bereich von 500 bis 600 °C. Generell ist im Kraftfahrzeugbereich zu berücksichtigen, dass auf Grund der vorhandenen Elektronikbauteile die Umgebungstemperatur üblicherweise im Bereich von - 40 °C bis 140 °C liegt.

So ist der erfindungsgemäße Abgasmassenstromsensor mit einer Steuereinrichtung verbunden. Eine Steuereinrichtung kann zum Umschalten des Abgasmassenstromsensors zwischen Betriebsmodus und Reinigungsmodus vorgesehen werden. Insbesondere handelt es sich bei der Steuereinrichtung durch die der Modus des Abgasmassenstromsensors gewählt wird, um diejenige Steuereinrichtung mit Hilfe der auch die Steuerung des Abgasmassenstromssensors im Betriebsmodus erfolgt. Insbesondere erfolgt durch die Steuereinrichtung auch die Bestimmung des Abgasmassenstroms.

Das Umschalten von Betriebsmodus in Reinigungsmodus erfolgt in Abhängigkeit von Kenndaten. Hierbei kann es sich um fest vorgegebene Kenndaten, vor allem der Aufheizzeit. Bekannt ist, dass es sich um eine vorgegebene Zeitspanne handelt, so dass der Reinigungsmodus beispielsweise während des Betriebs des Kraftfahrzeuges in vorgegebenen Zeitabständen durchgeführt wird. Ferner können als Kenndaten zeitunabhängige Kenndaten genutzt werden. Hierbei handelt es sich insbesondere um Aktionen, wie dem Starten des Motors. Besonders bevorzugt ist es hierbei einen Reinigungsmodus nach einem Motor-Kaltstart durchzuführen. Gemäß der Erfindung handelt es sich bei den Kenndaten um Sensor- bzw. Messdaten, durch die bestimmt wird, ob eine Reinigung des Abgasmassenstromsensors erforderlich ist. Hierbei kann durch gesondert vorgesehene Sensoren bestimmt werden, ob auf der Oberfläche des Abgasmassenstromsensors Ablagerungen vorhanden sind. Erfindungsgemäß wird jedoch hierbei die Aufheizzeit berücksichtigt. Sofern der Abgasmassenstromsensor Ablagerungen aufweist, müssen diese beim Aufheizen, insbesondere beim ersten Aufheizen des Abgasmassenstromsensors, mit erwärmt werden. Hierdurch verlängert sich die Aufheizzeit. Somit ist es möglich, bei einem Überschreiten der Aufheizzeit um einen vorgegebenen Schwellwert einen Reinigungsmodus auszulösen, bzw, dies bei der Bestimmung des Zeitpunkts, zu dem der nächste Reinigungsmodus durchgeführt wird, zu berücksichtigen.

Ferner ist es möglich, den Reinigungsmodus zyklisch und/oder bei bestimmten Betriebszuständen (Kaltstart) durchzuführen. Beim Durchführen des Reinigungsmodus muss das Ausgeben eines Sensorsignals unterbleiben oder entsprechend als "nicht gültig" definiert werden.

Ferner ist es möglich, bei der Bestimmung des Zeitpunkts für die Durchführung des nächsten Reinigungsmodus die Abgaszusammensetzung zu berücksichtigen. Hieraus kann die Wahrscheinlichkeit des Auftretens von Ablagerungen ermittelt werden.

Beim Betreiben eines Abgasmassenstromsensors in einem Abgasmassenstrom von Kraftfahrzeugen sind Reinigungstemperaturen von 450 bis 550 °C bevorzugt. Je nach verwendetem Material für den Abgasmassenstromsensor sowie in Abhängigkeit der Art der Ablagerungen kann die Reinigungstemperatur auch im Bereich von 500 bis 600 °C liegen. Ein Reinigungsmodus zum Abbrennen von Ablagerungen dauert vorzugsweise ca. 10 Sekunden.

Neben dem erfindungsgemäß besonders bevorzugten Einsatz des Abgasmassenstromsensors in Abgasströmen von Kraftfahrzeugen, ist das Verfahren selbstverständlich auch beim Einsatz des Abgasmassenstromsensors in anderen Bereichen, bei denen insbesondere die Gefahr von Ablagerungen besteht, vorteilhaft.

Der verwendete Abgasmassenstromsensor weist in besonders bevorzugter Ausführungsform einen Trägerkörper aus Keramik auf. Ggf. weist der Trägerkörper auch nur Keramik- Bestandteile auf, so dass eine entsprechend hohe Temperaturbeständigkeit gewährleistet ist. Das Heizelement ist vorzugsweise ebenfalls äußerst temperaturbeständig und weist vorzugsweise Platin auf. Besonders bevorzugt ist es, dass das Heizelement im Wesentlichen aus Platin hergestellt ist.

Besonders bevorzugt zur Durchführung des erfindungsgemäßen Verfahrens ist die Verwendung eines Abgasmassenstromsensors mit einem Sekundärheizelement wie in der Patentanmeldung des selben Anmelders mit dem selben Anmeldetag unter dem Titel "Abgasmassenstromsensor sowie Verfahren zum Betreiben eines Abgasmassenstromssensors" beschrieben ist. Hierbei kann das Sekundär-Heizelement nicht nur zum Heizen des Abgasmassenstromsensors in der Reinigungsphase genutzt werden, um ein zuverlässiges Reinigen des Messbereichs zu gewährleisten, sondern das Sekundär-Heizelement kann auch als Sensor zur Temperaturmessung, insbesondere zur Bestimmung des Zeitpunkts eines nächsten Reinigungsmodus verwendet werden.

In der anliegenden Zeichnung ist ein Abgasmassenstromsensor, der zur Durchführung des erfindungsgemäßen Verfahrens geeignet ist, in einer Seitenansicht schematisch dargestellt.

Ein Abgasmassenstromsensor 10 weist einen im Wesentlichen quaderförmigen Trägerkörper 12 auf. Der Trägerkörper 12, der vorzugsweise Keramik aufweist, weist eine Breite im Bereich von 2 bis 10 mm, eine Höhe im Bereich von 2 bis 20 mm und eine Tiefe im Bereich von 0,1 bis 0,5 mm auf. In bevorzugter Ausrichtung des Abgasmessenstromsensors im Angasstrom ist die Tiefe des Trägerkörpers die vom Abgas angeströmte Seite. Die Schmalseite des Trägerkörpers 12 wird durch den Abgasmassenstrom in Richtung eines Pfeils 14 angeströmt. Auf einer Oberfläche 16 des Trägerkörpers ist ein Heizelement 18 vorgesehen. Das Heizelement 18 kann auch innerhalb des Trägerkörpers 12 angeordnet sein.

Der Trägerkörper 12 ist über ein Haltelement 20 an einer Innenseite 22 eines Abgaskanals 24 angeordnet.

Das Heizelement 18 ist über Leitungen 26 mit einer Steuereinrichtung 28 verbunden. Die Steuereinrichtung 28 kann über eine Leitung 30 mit einer Bordelektronik oder dergleichen verbunden sein. Mit Hilfe der Steuereinrichtung 28 erfolgt über die Leitungen 26 ein Heizen des Heizelements 18. Gleichzeitig erfolgt über die Leitungen 26 eine Temperaturmessung des Trägerkörpers 12 in einem Messbereich 32. Durch die Steuereinrichtung 28 erfolgt ferner das Umschalten des Betriebsmodus und Reinigungsmodus in Abhängigkeit von Kenndaten.

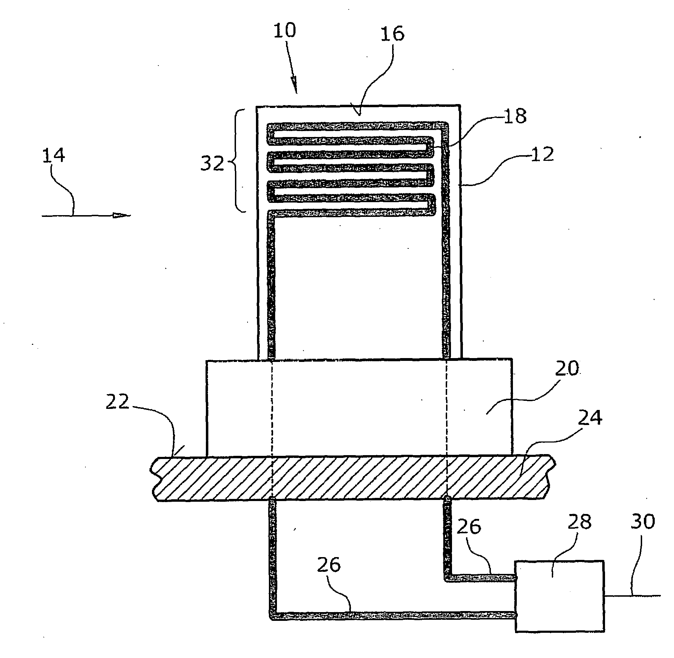

## Patentansprüche

1. Verfahren zum Betreiben eines Abgasmassenstromsensors, insbesondere in Abgasmassenströmen von Kraftfahrzeugen, bei welchem,
der Abgasmassenstromsensor in einem Betriebsmodus bei einer Betriebstemperatur betrieben wird, und
der Abgasmassenstromsensor in einem Reinigungsmodus zum Reinigen eines Messbereichs (32) umgeschaltet wird, wobei die Reinigungstemperatur höher als die Betriebstemperatur ist,
wobei der Abgasmassenstromsensor mit einer Steuereinrichtung (28) verbunden ist, durch die in Abhängigkeit von Kenndaten ein Reinigungsmodus aktiviert wird und
wobei als Kenndaten die Aufheizzeit des Abgasmassenstromsensors berücksichtigt wird.

2. Verfahren nach Anspruch 1, bei welchem der Reinigungsmodus in einer Motor-Startphase, insbesondere in einer Motor-Kaltstartphase, durchgeführt wird.

3. Verfahren nach einem der Ansprüche 1 oder 2, bei welchem als Kenndaten die Aufheizzeit des Trägerkörpers (12) des Abgasmassenstromsensors berücksichtigt wird.

4. Verfahren nach einem der Ansprüche 1 bis 3, bei welchem als Kenndaten die Abgaszusammensetzung berücksichtigt wird.

5. Verfahren nach einem der Ansprüche 1 bis 4, bei welchem als Kenndaten die Zeitspanne seit Durchführung des letzten Reinigungsmodus berücksichtigt wird.

6. Verfahren nach einem der Ansprüche 1 bis 5, bei welchem die Betriebstemperatur ca. 100 °C höher als die Fluidtemperatur des zu messenden Abgases ist.

7. Verfahren nach einem der Ansprüche 1 bis 6, bei welchem die Reinigungstemperatur im Bereich von 450 bis 600 °C liegt.

8. Verfahren nach einem der Ansprüche 1 bis 7, bei welchem der Reinigungsmodus 5 bis 10 Sekunden dauert.

## Claims

1. Method for operating an exhaust gas mass flow sensor, particularly in exhaust gas mass flows of vehicles, wherein:
the exhaust gas mass flow sensor is operated in a mode at an operating temperature, and
the exhaust gas mass flow sensor **is switched to a cleaning mode for cleaning** (bitte prüfen! FR-Ansprüche wurden entsprechend übersetzt) a measuring zone (32), the cleaning temperature being higher than the operating temperature,
wherein the exhaust gas mass flow sensor is connected with a control means (28) by which a cleaning mode is activated in dependence on characteristics, and
wherein the heat-up time of the exhaust gas mass flow sensor is taken into consideration as a characteristic.

2. Method of claim 1, wherein the cleaning mode is executed in a start-up phase of the engine, particularly in a cold start phase of the engine.

3. Method of one of claims 1 or 2, wherein the heat-up time of the carrier body (12) of the exhaust gas mass flow sensor is taken into consideration as a characteristic.

4. Method of one of claims 1 to 3, wherein the exhaust gas composition is taken into consideration as a characteristic.

5. Method of one of claims 1 to 4, wherein the time since the execution of the last cleaning mode is taken into consideration as a characteristic.

6. Method of one of claims 1 to 5, wherein the operating temperature is approx. 100°C higher than the fluid temperature of the exhaust gas to be measured.

7. Method of one of claims 1 to 6, wherein the cleaning temperature is in the range from 450 to 600°C.

8. Method of one of claims 1 to 7, wherein the cleaning mode lasts 5 to 10 seconds.

## Revendications

1. Procédé de mise en oeuvre d'un détecteur de débit massique de gaz d'échappement, particulièrement dans des débits massiques de gaz d'échappement de véhicules automobiles, dans lequel
le détecteur de débit massique de gaz d'échappement est opéré dans un mode de fonctionnement à une température de fonctionnement,
le détecteur de débit massique de gaz d'échappement est commuté dans un mode de nettoyage pour nettoyer une zone de mesurage (32), la température de nettoyage étant plus élevée que la température de fonctionnement,
le détecteur de débit massique de gaz d'échappement étant raccordé à un moyen de commande (28), par lequel un mode de nettoyage est activé en fonction de caractéristiques, et
les caractéristiques tenant compte de temps de chauffage du détecteur de débit massique de gaz d'échappement.

2. Procédé selon la revendication 1, dans lequel le mode de nettoyage est mis en oeuvre dans une phase de démarrage du moteur, particulièrement une phase de démarrage à froid du moteur.

3. Procédé selon l'une des revendications 1 ou 2, dans lequel les caractéristiques tiennent compte du temps de chauffage du corps de support (12) du détecteur de débit massique de gaz d'échappement.

4. Procédé selon l'une quelconque des revendications 1 à 3, dans lequel les caractéristiques tiennent compte de la composition du gaz d'échappement.

5. Procédé selon l'une quelconque des revendications 1 à 4, dans lequel les caractéristiques tiennent compte de la période dès la mise en oeuvre du dernier mode de nettoyage.

6. Procédé selon l'une quelconque des revendications 1 à 5, dams lequel la température de fonctionnement est environ 100°C plus élevée que la température de fluide du gaz d'échappement à mesurer.

7. Procédé selon l'une quelconque des revendications 1 à 6, dans lequel la température de nettoyage est comprise entre 450 et 600°C.

8. Procédé selon l'une quelconque des revendications 1 à 7, dans lequel le mode de nettoyage dure de 5 à 10 seconds.
